# EUROPEAN PATENT APPLICATION

(11) **EP 0 937 634 A1**
(43) Date of publication of application: **25.08.1999**
(21) Application number: 98103066.1
(22) Date of filing: 21.02.1998
(51) Int. Cl.: B62D 55/108, B60G 11/18

(54) **Tracke vehicle with torsion bar suspension**

(71) Applicant: VXO Group International AG, 9490 Vaduz (LI)
(72) Inventor: Rantala, Klaus, 23500 Uusikaupunki (FI)
(74) Representative: Kaminski, Susanne, Dr.

(57) **Abstract**

In a vehicle with a hull (2) to which on the right and left a track (4) is provided each running over at least three wheels (5, 6), the wheels (5, 6) are pivoted on wheel suspensions with swing arms (16, 16'). To spring the movement of the swing arms (16, 16') around their swinging axis, torsion bars (17, 20) are provided, whereby at least one torsion bar section (20) of each sprung wheel (5, 6) firmly anti-torsional anchored to a swing arm (16, 16') runs staggered to the swinging axis of this swing arm (16, 16'). Consequently, the wheels (5, 6) can be arranged symmetrically with respect to the vehicle medium plane running in the longitudinal direction.

## Description

The invention refers to a vehicle pursuant to the preamble of claim 1.

At least part of the weight of vehicles for difficult terrain is transferred on to its tracks. Each track is guided around road wheels and at least one idler wheel as well as at least one sprocket drive. To enable the area of the tracks in contact with the ground to adjust to irregularities of the ground, the road wheels and the idler wheel are sprung. In the case of many known armoured, off-road and amphibian vehicles, torsion bars are applied for springing of the wheels. One end of these bars is anchored to the hull, the other end is attached to a swing arm pivoting around the axis of the torsion bar. Each of the wheels to be sprung is pivotally mounted in the area of the free end of a swing arm. The length of the swing arm, the torsion capacity of the torsion bars and their length are so dimensioned that the wheels are provided with the required vertical mobility and springing characteristic. It is known that the required springing characteristic can only be achieved if the torsion bars extend across the entire width of the vehicle or hull. In order to spring the swing arms, so-called staggered running gear is used. Thereby, at least three wheels are provided on each side. Each wheel is allotted a torsion bar, which essentially stretches across the free space between the wheels on the left and the right side of the vehicle. In the case of staggered running gear, the rotary axis of the swing arms of the wheels opposite each other are somewhat offset in the longitudinal direction of the vehicle. Accordingly, the wheels too are not symmetrically arranged with respect to a vehicle medium plane in longitudinal direction, but are staggered. In addition to this asymmetry, there is the disadvantage that staggered torsion bars are difficult to assemble and replace.

Staggered running gear is used both for armoured vehicles having only tracks - such as the German Leopard tank - as well as for traction vehicles which in addition to the tracks also include a pair of steerable - above all drivable - wheels, as used in the DEMAG D7 (1938 to 1944).

The task of the invention is to find a suspension solution which is easy to assemble and enabling symmetric arrangement of the wheels.

This task is solved with the features of claim 1.

Within the framework of the submitted invention it became clear that the symmetrical arrangement of the wheels on both sides of the vehicle with torsion bars is only possible if the torsion bars do not stretch across the entire width of the hull from the swing arms along the rotary axis. At least one torsion bar section of each sprung wheel must be staggered to the swinging axis of the swing arm connected to it for load transmission, especially in a positive- or possibly non-positive-locking way. In order to spring the swing arm over a sufficiently large swinging area, the preferred solution makes provision for the spring characteristic to be achieved via the interaction of at least two torsion bar sections. Each swing arm is provided with at least two torsion bar sections pivoted with one another, whereby a first torsion bar section - connected firmly to the swing arm - stretches along the swinging axis of the swing arm to a vertical medium plane of the hull and is pivotally connected, especially in a positive-locking way, to a first end area of a second torsion bar section in front of the medium plane. Said second section should preferably run parallel to the first and its second end area be firmly anti-torsional anchored to the hull.

The torsion bar sections adjacent to one another are connected to each other via a spur-gear system. The gear systems are preferably each installed in a gear case, said gear case being anchored particularly on both sides to a vertical dividing wall in the area of the medium plane of the hull. A preferred form of construction makes provision for a bearing box to be mounted at the swing arm on the outer wall of the hull. The first torsion bar section is connected to said bearing box in a pivot bearing and the second end of the second torsion bar section firmly anti-torsional anchored thereto. As a result of using said gear case or bearing box and its location on the dividing wall or outer wall, the springing of the various wheels are independent of each other, enabling assembly or removal of torsion bar sections of a wheel or swing arm to be carried out independently of the springing of the other wheels.

It stands to reason that in the case of three or more torsion bar sections also the torsion bar sections on the outer wall are pivoted, especially in a positive-locking way, with one another and if need be the last section is firmly anti-torsional anchored to the dividing wall.

The symmetrical arrangement of the swing arms on both sides departs from staggered running gear to a spring unit system, the torsion bars of a swing arm being independent of the suspension of the swing arm located opposite. In addition to facilitating assembly and repairing a broken torsion bar section, this unit system also has the advantage that stability is increased in the area of the unit. In the event of distortion to the hull, the torsion bar sections are less stressed than torsion bars in staggered running gear.

The drawings exemplify the invention based on a form of construction. Shown is in
- Fig. 1: side view of an armoured vehicle with tracks and a pair of steerable wheels
- Fig. 2: schematic drawing of the drive system of an armoured vehicle according to Fig. 1
- Fig. 3: schematic drawing of the springing of the road and idler wheels
- Fig. 4: schematic drawing of a springing with three torsion bar sections.
- Fig. 5 and 6: schematic drawings of an idler wheel springing
- Fig. 7: horizontal section through a swing arm for an idler wheel springing
- Fig. 8: a section of a side view of a swing arm for an idler wheel springing
- Fig. 9: a side view of a swing arm with a shock absorber located between it and the hull.

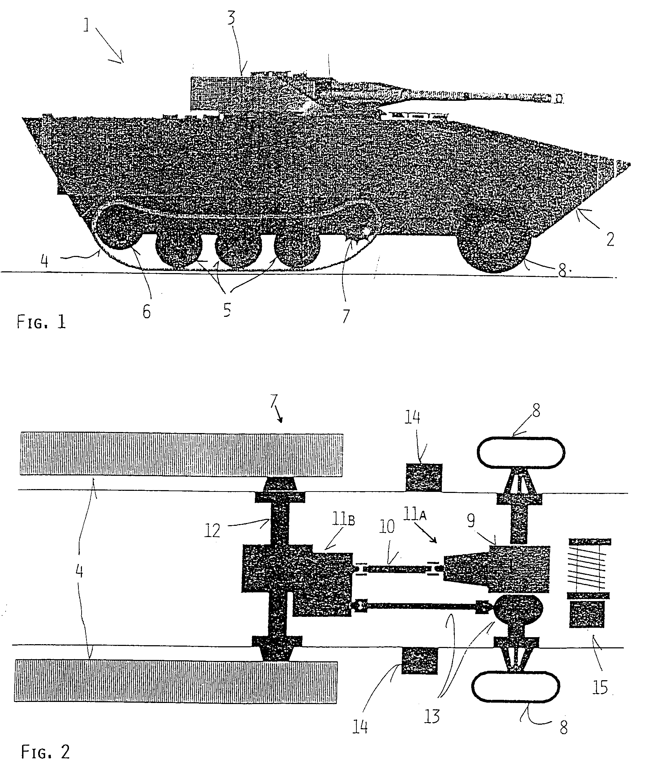

Fig. 1 shows an armoured vehicle 1 with a hull 2 and an armed turret 3. Each of the tracks 4 run around three road wheels 5, an idler wheel 6 and a sprocket drive 7. A pair of steerable front wheels 8 are located in the front area of the hull 2.

According to Fig. 2, the tractive effort of an engine 9 is transmitted via a gear unit 11a and a main shaft 10 to a transfer unit 11b propelling the sprocket drive 7 attached to a track drive axle 12. The pair of front wheels 8 are propelled by the transfer unit 11b via a transmission system 13. The hull being formed as a flotable body, hydraulic propeller drives 14 are provided. Preferably, a hydraulic winch 15 is installed at the front of the hull 2.

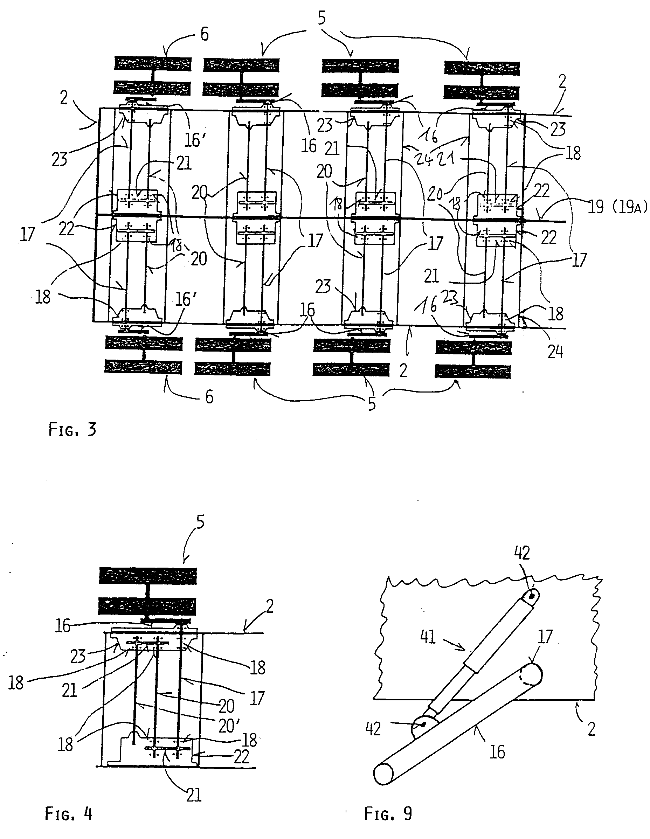

Fig. 3 shows a form of construction of the suspension of the road wheels 5 and the track idler wheels 6 formed as double wheels. These double wheels 5 and 6 are pivoted at the free end of the swing arms 16 and 16'. The swing arms 16, 16' are firmly connected to the first torsion bar sections 17, each being pivoted at both their ends in rotary bearings 18. The first torsion bar sections 17 stretch along the swinging axis of the swing arm 16, 16' to a vertical medium plane 19a of the hull 2. In front of the medium plane 19a, the first torsion bar sections 17 are each pivotally connected to the first end areas of second torsion bar sections 20. Said second sections 20 preferably run parallel to the first sections, are located in rotary bearings 18' at the first end areas and firmly anti-torsional anchored to the hull 2 at their second end areas.

The torsion bar sections 17 and 20 adjacent to one another are connected to each other via spur-gear systems 21. The gear systems 21 are preferably each installed in a gear case 22, whereby the gear cases 22 are anchored particularly on both sides to a vertical dividing wall 19 in the area of the medium plane 19a of the hull 2. A preferred form of construction makes provision for a bearing box 23 to be mounted at the swing arm 16, 16' on the outer wall of the hull 2. The first torsion bar sections 17 are connected to said bearing box 23 in pivot bearings 18 and the second ends of the second torsion bar sections are firmly anti-torsional anchored thereto. In order to protect the torsion bar sections 17, 20 and especially to increase the stability of the hull, preferably transversal walls 24 are installed in front of and behind each of the associated torsion bar sections 17, 20. The transversal walls 24 are firmly connected to the dividing wall 19 and the side walls of the hull 2. The chamber structure thus formed ensures an extremely high torsional and distortion rigidity of the hull area with the torsion bars.

Fig. 4 shows a specific construction where an idler wheel 5 is sprung by three torsion bar sections 17, 20, 20'. The second torsion bar section 20 is not firmly anti-torsional anchored to the bearing box 23, but is mounted in a pivot bearing 18 and is connected to a further torsion bar section 20' via a gear system 21. This further and last torsion bar section 20' is firmly anti-torsional anchored to the gear case 22.

It is obvious that to increase and change the swinging capacity of the swing arms 16, also more than two or three torsion bar sections can be connected to one another in series or that the torsion bar sections connected together can have varying spring characteristics. Moreover, it is also an option that the torsion bar sections 17, 20 are not arranged symmetrically to two wheels located opposite each other. For example, a torsion bar section which is connected to the swing arm of a left or accordingly of a right wheel is located in front of or behind the swinging axis, respectively. The torsion bar sections differently staggered to the swinging axis of the right and left swing arm could also stretch across the entire width of the hull, and second torsion bar sections could be omitted. Furthermore, the gear systems 21 could be designed so that the second torsion bar section runs diagonally, especially orthogonally to the first.

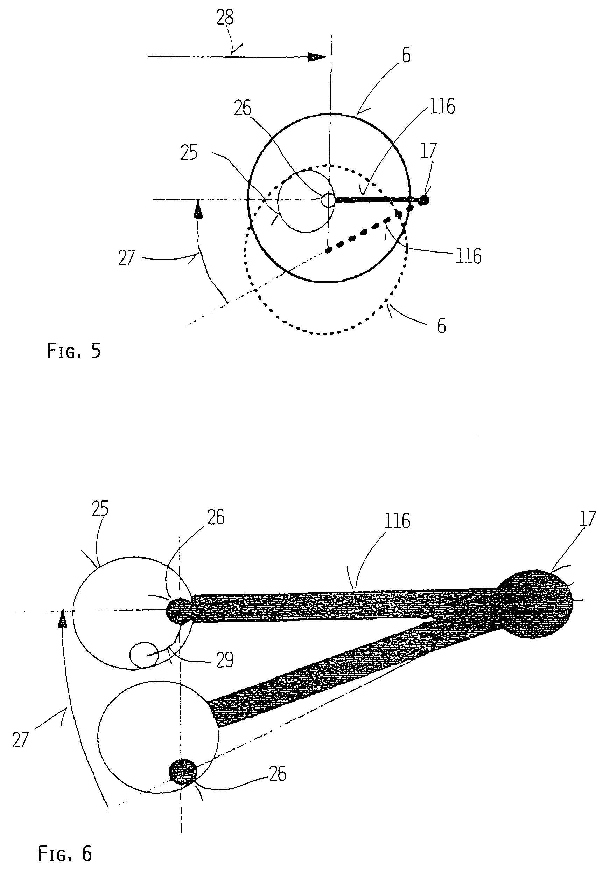

Fig. 5 shows a swing arm 116 where the pivot bearing 26 of the idler wheel 6 attached to it is moved relative to the swing arm 116 both with the rotating motion around the axis of the torsion bar section 17 as well as with a compensation device 25. Thereby the pivot movement and the compensation movement should be so coupled that the pivot bearing 26 is essentially moved vertically at angles of traverse 27 in a determined field of traverse and that the horizontal position of the pivot bearing 26 essentially remains constant. In this way it can be prevented that the track tension changes owing to axis movements of the idler wheel 6. This is of particular importance when the idler wheel 6 is also employed as road wheel. If the load deflection of road wheels 5 (Fig. 1) should essentially be vertical, then the road wheels 5 can be provided with compensation devices 25.

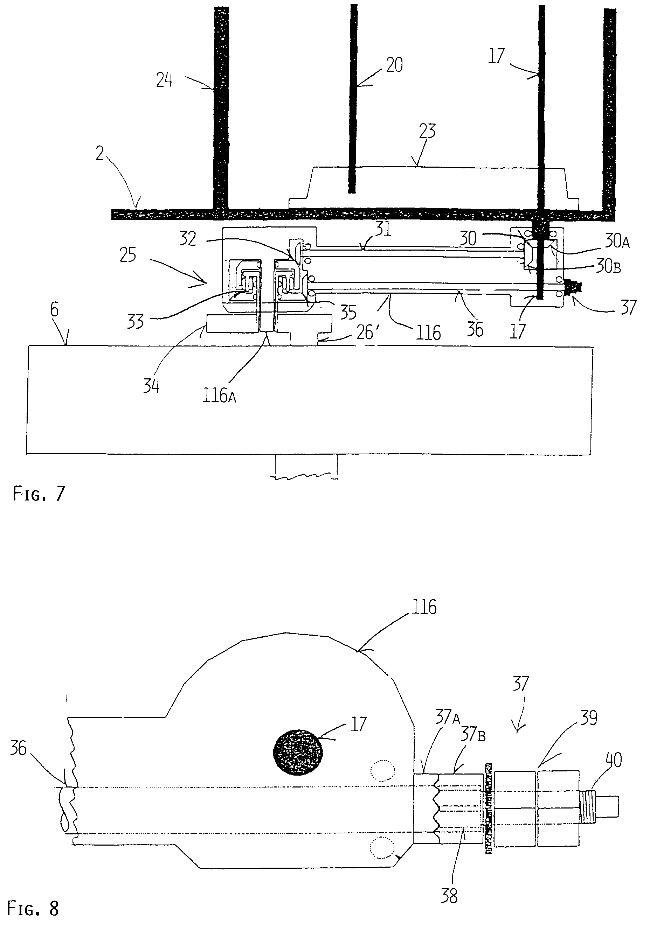

Fig. 6 shows a compensation device 25, which moves the pivot bearing 26 corresponding to the prevailing angle of traverse 27 to a spherical position 29 of the compensation device 25, whereby the horizontal components of the pivoting and compensation movements essentially neutralise one another. The movement of the pivot bearing 26 resulting from the overlapping of the pivoting and compensation movements corresponds to a cycloid and can be effected especially for example with an epicyclic gear.

Fig. 7 shows a specific construction of the compensation device 25 in which the swing arm 116 pivots around the axis of the torsion bar section 17 and comprises a compensation circular shaft 116a around which the pivot bearing 26 and a bearing shaft 26' rotates. The bearing shaft 26' protrudes eccentrically from a disk. In order to couple the motion of the swing arm with the rotation of the bearing shaft 26', the position of the swing arm 116 is transmitted to the disk 34 via a first bevel gearing 30, a first shaft 31 pivoted in the swing arm 116, a second bevel gearing 32 and an adjustable gear 33. The first bevel gearing 30 comprises a first gear 30a firmly anchored to the hull 2 and a second bevel gear 30b attached to the first shaft 31. The adjustable gear 33 is connected to an adjustable locking gear 37 via a third bevel gearing 35 and a second shaft 36 pivoted in the swing arm 116. With the adjustable gear 33, a desired allotment of the angle of traverse 27 and the spherical position 29 (Fig. 6) can be set and fixed on the locking gear 37. Hence, the locking gear 37 enables a point of the epicycle path of the pivot bearing 26 to be adjusted around the axis of the torsion bar 17.

Fig. 8 shows a section of the swing arm 116 firmly connected to the first torsion bar section 17, the second shaft 36 located therein and the adjustable locking gear 37. The locking gear 37 comprises interlocking parts 37a, 37b, which can be locked together in a desired rotary positioning of the second shaft 36. Thereby, one of the two parts 37a, 37b is firmly connected to the swing arm 116, and the other firmly anti-torsional anchored to the second shaft 36 but shiftable along the second shaft 36, especially via a form-locking many-sided profile 38. In order to press the two parts 37a, 37b to each other, provision is made for example for a double nut configuration 39 on a thread 40 of the second shaft 36.

It stands to reason that the compensation device can also comprise - instead of an epicyclic gearing - a pivot position determination and a positioning device for positioning the pivot bearing on the swing arm corresponding to the determined pivot position. Furthermore, also a guiding device could be located between the hull and the swing arm so that the pivot bearing can essentially only be moved vertically.

Fig. 9 shows a preferential embodiment in which the swing arms 16 of the road wheels are additionally connected to the hull 2 via shock absorbers/dampers 41 Each damper 41 is attached via swivel connections 42, each swivelling at a swing arm 16 and at the hull 2. Preferably, hydraulic dampers are used. The better driving characteristics in the case of uneven terrain known from vehicle construction and also a smaller dynamic stress of the torsion bar sections 17, 20 (Fig.3) are ensured as a result of employing shock absorbers. It has been shown that to achieve the better driving characteristics, it is advantageous to dampen the movement of the swing arms of all the road wheels with shock aborbers 41.

## Claims

1. Vehicle (1) with a hull (2) to which on the right and left a track (4) each is provided running over at least three wheels (5, 6), said wheels (5, 6) are pivoted on wheel bearings with swing arms (16, 16'), whereby torsion bars (17, 20) are provided to spring the movement of the swing arms (16, 16') around the swinging axis of said swing arms (16, 16'), characterised in that at least one torsion bar (20) of each sprung wheel (5, 6) firmly anti-torsional anchored to a swing arm (16, 16') runs staggered to the swinging axis of this swing arm (16, 16').

2. Vehicle according to claim 1, characterised in that the swinging axis of pairs of wheels (5, 6) located opposite one another on the left and right of the hull are in alignment.

3. Vehicle according to claim 1 or 2, characterised in that each swing arm (16, 16') is provided with at least two torsion bar sections (17, 20) connected with each other, whereby a first torsion bar section firmly connected to the swing arm (16, 16') stretches along the swinging axis of the swing arm (16, 16') to a vertical medium plane (19a) of the hull (2) and is pivotally connected, especially in a positive-locking way, in front of the medium plane (19a) with the first end area of a second torsion bar section (20), said second section (20) preferably runs parallel to the first and at its second end is firmly anti-torsional anchored to the hull (2).

4. Vehicle according to claim 3, characterised in that the torsion bar sections (17, 20) adjacent to one another are connected to each other via spur-gear systems (21), said gear systems (21) are preferably each installed in a gear case (22), whereby the gear cases (22) are anchored particularly on both sides to a vertical dividing wall (19) in the area of the medium plane of the hull (2) running in the longitudinal direction of the vehicle.

5. Vehicle according to claim 3, characterized in that bearing boxes (23) are mounted at the swing arm (16, 16') on the outer wall of the hull (2), whereby a first torsion bar section (17) is connected to said bearing box (23) in a pivot bearing (18) and the second end of the second torsion bar section (17) is firmly anti-torsional anchored thereto.

6. Vehicle according to one of the claims 3 to 5 characterized in that the torsion bar sections (17, 20) of each wheel (5, 6) can be removed from and inserted into the hull (2) independent of the suspension or springing of another wheel (5, 6).

7. Vehicle according to one of the claims 1 to 6 characterized in that on both sides a wheel or double wheel is designed as a track idler wheel (6) and three - if necessary more than three - wheels or double wheels are designed as road wheels (5), whereby the track idler wheels are preferably located at the rear track area end and hence in the area of the rear of the vehicle, and the swing arms (16) of the road wheels (5) are preferably connected to the hull (2) via shock absorbers (41).

8. Vehicle according to claim 7 characterized in that at least in the case of each track idler wheel (6) a compensation device (25) is provided between the swing arm (16', 116) and the pivot bearing (26) of the idler wheel (6) attached thereto, whereby said compensation device (25) overlaps the pivot movement of the pivot bearing (26) around the axis of the first torsion bar section (17) with a compensation movement, whereby the pivot movement and the compensation movement are coupled so that, at angles of traverse in a determined field of traverse, the pivot bearing (26) is essentially moved vertically, and the horizontal position of the pivot bearing (26) essentially remains constant.

9. Vehicle according to claim 8 characterised in that the compensation device (25) comprises an epicyclic gearing and an adjustable locking gear (37), whereby the locking gear (37) enables a point of the epicycle path of the pivot bearing (26) to be adjusted around the axis of the torsion bar (17).

10. Vehicle according to claims 1 to 9 characterised in that a track sprocket drive (7) is provided at the front track area end of each track, whereby a gear unit (11a) enables both sprocket drives (7) to be driven the same and particularly also differently.

11. Vehicle according to the claims 1 to 10 characterised in that a steerable and drivable pair of wheels (8) is provided in the area between the front track area end and the front of the vehicle.
